# EUROPEAN PATENT APPLICATION

(11) **EP 2 567 888 A1**
(43) Date of publication of application: **13.03.2013**
(21) Application number: 11180386.2
(22) Date of filing: 07.09.2011
(51) Int. Cl.: B62M 11/14, B62M 11/18

(54) **Multi-gear transmission for a bicycle**

(71) Applicant: Zielinski, Grzegorz, 55-100 Trzebnica (PL)
(72) Inventor: Zielinski, Grzegorz, 55-100 Trzebnica (PL); Zarebski, Igor, 26-652 Milejowice (PL)
(74) Representative: Malcherek, Piotr

(57) **Abstract**

A multi-speed bicycle transmission (1) comprises a bottom bracket axle (5) located in a housing (2) and two planet carriers (7,8). Each of said planet carriers (7,8) comprises at least two planetary sets (16,16',17,17') , each of which comprises a sun wheel (25,25',26,26'), a planet wheel or wheels (21,21',22,22') and an outer rim (8,8',9,9') . Around the bottom bracket axle (5) there is a coaxial intermediate shaft (9) , on the outer part of which there are non-rotationally located the sun wheels (25,25',26,26') of the planetary sets (16,16',17,17') of the first and second planet carriers (7,8). The transmission (1) also comprises a pawl mechanism in the form of at least two separate pawls (29,30), each of which cooperates with respective outer rims (18,18',19,19') of the planetary sets (16,16',17,17') of the first and the second planet carrier (7,8). The second planet carrier (8) is attached to an output wheel (27). The work of the paw (29,30), which may be located rotationally on a shaft (28), is controlled by means of a control shaft (32) comprising cams (33).

## Description

### Subject of the invention

The subject of the invention is a multi-speed bicycle gear transmission comprising a rotational bottom bracket axle, a planet carrier with a planetary set, a pawl mechanism of the planetary set and an output wheel for conveying the power from the gear transmission to a bicycle wheel, for example with the use of a continuous loop.

### State of the art

The multi-speed gear transmissions known for example from patent descriptions with publication numbers WO 2008/089932 A1 and WO 2010/072397 A1 comprise several cooperating toothed wheels and additionally comprise a planetary set.

Moreover, a commonly used bicycle dual-speed gear transmission manufactured by Truvativ Hammerschmidt comprising a rotational bottom bracket axle whose ends are used for fixing cranks and which comprises a planet carrier with a planetary set comprising a sun wheel, planet wheels and an outer rim and an output wheel is known. What is more, the transmission comprises a pawl mechanism cooperating with the planetary set. The transmission of this construction enables the output wheel to rotate at two possible speeds: either with the speed of rotation of the bottom bracket axle or, after activating the pawl mechanism which blocks the sun wheel of the planetary set, with the speed relating to the gear ratio of the planetary set.

### The essence of the invention

A multi-speed bicycle gear transmission according to the invention comprises a rotational bottom bracket axle whose ends are provided for fixing cranks. A planet carrier with a planetary set comprising a sun wheel, planetary wheel or wheels and an outer rim is non-rotationally fixed to said bottom bracket axle. Moreover, the transmission comprises an output wheel capable of rotating at a speed that is different from the rotational speed of the bottom bracket axle and a pawl mechanism of the planetary set. The transmission according to the invention is characterised by that said planet carrier comprises at least two planetary sets, each of them comprising a sun wheel, a planetary wheel or wheels and an outer rim, there is also a second planet carrier comprising at least two planetary sets, each of which comprising a sun wheel, a planetary wheel or wheels and an outer rim - said second planet carrier located coaxially and rotationally around the bottom bracket axle. What is more, around the bottom bracket axle between the bottom bracket axle and the first and second planet carrier there is an intermediate shaft, located coaxially and rotationally to the bottom bracket axle. The intermediate shaft is a hollow shaft with non-rotationally located sun wheels of the planetary sets of the first and second planet carrier. The pawl mechanism has the form of at least two separate pawls which cooperate respectively with outer rims of the planetary sets of the first and second planet carrier.

In a preferred embodiment the first planet carrier comprises more than two planetary sets, preferably four and the second planet carrier also comprises more than two planetary sets, preferably four.

It is also advisable that both planet carriers and an output wheel are located inside a housing of the transmission.

The output wheel can have the form of a chain wheel, a sheave wheel including a toothed wheel or a toothed wheel of a gear transmission.

It is most advantageous when each of the outer rims of the planetary sets of the first planet carrier and of the second planet carrier has an assigned separate pawl.

It is advantageous then when all the pawls are rotationally fixed on a longitudinal shaft and are equipped with cooperating spring elements.

It is also advantageous when the position of the pawls is controlled by means of a control shaft comprising cams assigned to the pawls.

In such a construction it is advisable when the location of the control shaft is stabilised by means of a blocking element supported by a spring element and the position of the control shaft is regulated by a cord wrapped around the control shaft.

Preferably the first planet carrier may be fixed by means of bearings on the intermediate shaft and in the housing and/or the side cover thereof.

Preferably the second planet carrier may be fixed by means of bearings on the intermediate shaft and in the housing and/or the side cover thereof.

The multi-speed bicycle transmission according to the invention comprises two planet carriers, each of which comprising two or more planetary sets, which provides the possibility of several or ten-odd gears of the transmission. Blocking of the outer rims of the respective planetary sets with the use of two individual pawls, each of which cooperates with the outer rims of the planetary sets of each planet carrier leads to a better balance of forces and more advantageous power flow than in case of sun wheel blocking. It results from the fact that a sun wheel with smaller diameter rotates with higher rotational speed than an outer rim with larger diameter. Consequently, it is possible to diminish the dimensions of individual planetary set, in particular the width thereof, which in turn allows for diminishing the total dimensions of the transmission or place more planetary sets within thus increasing the number of gears. In a preferred embodiment the pawl mechanism has the form of many separate pawls so that each of the outer rims of the planetary sets of the first and second planet carrier has an assigned pawl. What is more the pawls are mounted rotationally on a longitudinal shaft and the work thereof is controlled by a rotational control shaft comprising cams assigned to the pawls and regulating the work thereof. Such a construction of the pawl mechanism ensures precise and uninterrupted work of the pawls and fluent shift of transmission gears. Moreover, the construction of the transmission ensures the isolation of the transmission mechanism including the output wheel from external factors such as water, sand, mud or dust. Therefore the transmission works effectively in all conditions and is durable and reliable, which eliminates the need for frequent maintenance. In the most preferred embodiment each planet carrier comprises four planetary sets, which means sixteen possible gears. Such realisation is possible to apply in all types of bicycles, in particular in mountain bicycles whose range of gears is the widest. What is more the use of the intermediate shaft and integrating the shaft with all sun wheels of the planetary sets of the first and second planet carrier, which leads to coupling of the first and second planet carrier, stabilises the work of the transmission and ensures its reliable work and high effectiveness of the transmission.

The transmission according to the invention comprises two planet carriers, each of the carriers comprising two or more, for example three, four or five planetary sets. The first planet carrier rotates at the speed of the crank, whereas the second planet carrier rotates at the speed of the output wheel. The sun wheels of all the planetary sets are integrated with the intermediate shaft which is located coaxially to the bottom bracket axle and they always rotate at the same speed. The gear ratios generated by individual planetary sets mounted on the first planet carrier are preferably different from gear ratios generated by individual planetary sets mounted on the second planet carrier. The gear ratio is achieved by simultaneous blocking of one of the outer rims of the planetary sets of the first planet carrier and one of the outer rims of the planetary sets of the second planet carrier.

The power is transmitted from the cranks to the bottom bracket axle connected to it, for example by means of a spline coupling. The power from the bottom bracket axle is transmitted to the first planet carrier which is coupled with the bottom bracket axle, for example by means of a spline coupling. From the first planet carrier the power is transmitted to the planet wheel or wheels of the locked planetary set. From said planet wheels the power is split between the outer rim of the locked planetary set and the sun wheel of the set. From the sun wheel, which is integrated with the intermediate shaft, by means of said shaft the power is transmitted to the sun wheel of the locked planetary set of the second planet carrier. From the sun wheel the power is transmitted to the planet wheel or wheels of the locked set of the second planet carrier. From said planet wheels the power is split between the locked outer rim and the second planet carrier. From the second planet carrier the power is transmitted to the output wheel. The shift of the gear ratio takes place through the changed configuration of the locked outer rims. The sun wheels located on the intermediate shaft may be rigid fastened to said shaft or alternatively on the shaft there may be toothing performing the function of the sun wheel.

Locking of the outer rims in the most advantageous embodiment is realised by means of rotational, individual pawls assigned to each of the outer rims and controlled by a rotational control shaft in such a way that said shaft has appropriately shaped and located cams on its surface, into which, in the appropriate position, selected pawls go into, which, by means of springs, are put into a position which lock selected outer rims. The position of the control shaft is stabilised by a blocking element and a spring mechanism assigned thereto, for example in the form of a ball and a spring, which may be mounted into a housing. The control shaft has recesses into which in the appropriate position the ball goes thus locking the free rotating of the shaft. The rotating of the shaft is realised by means of a cord or cords wrapped around the control shaft.

### Embodiments

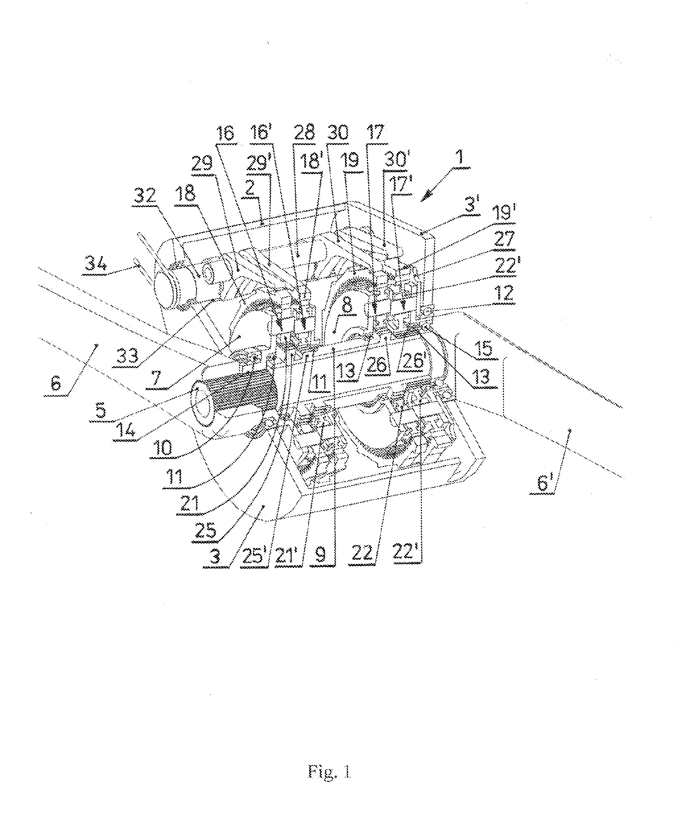

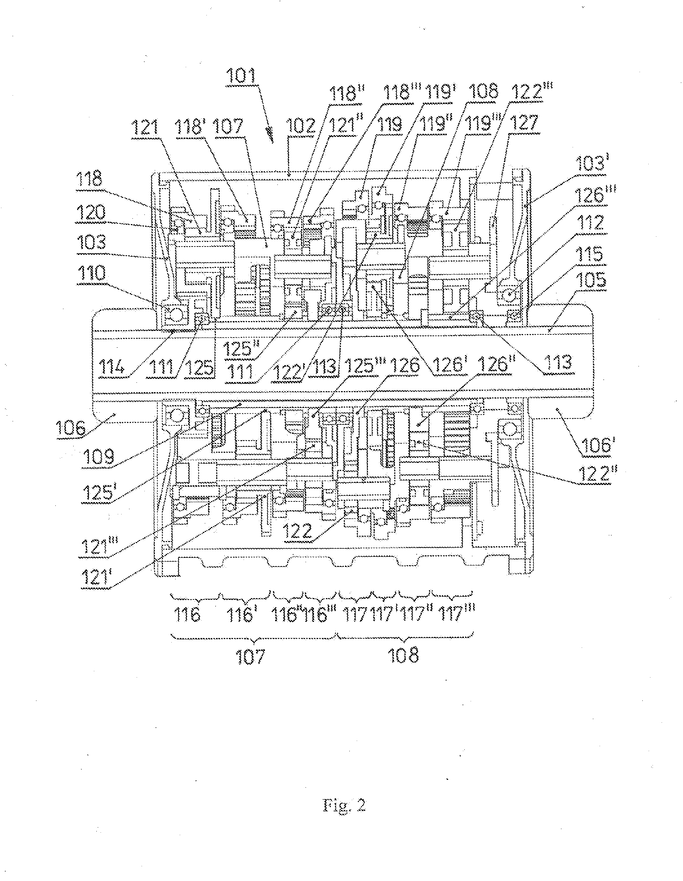

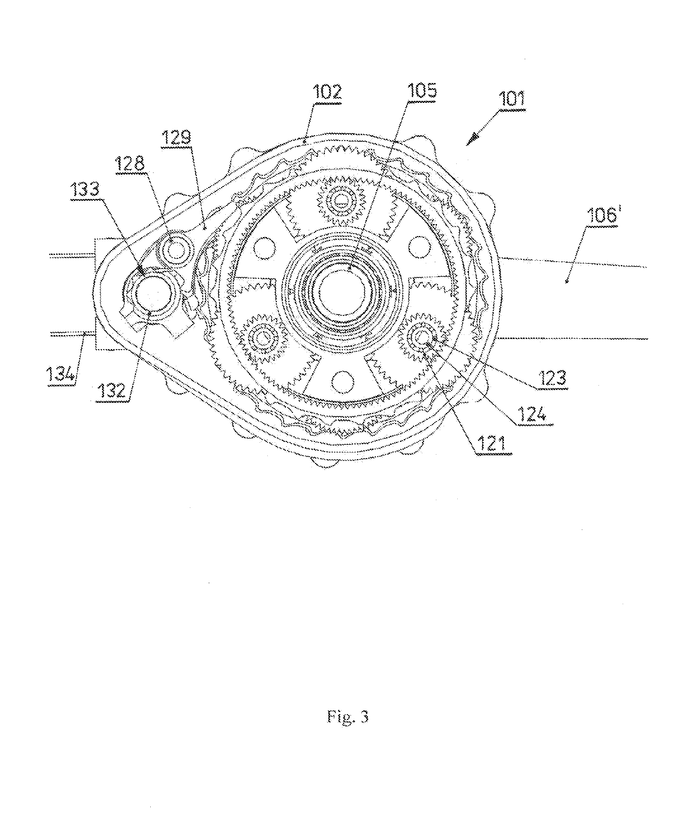

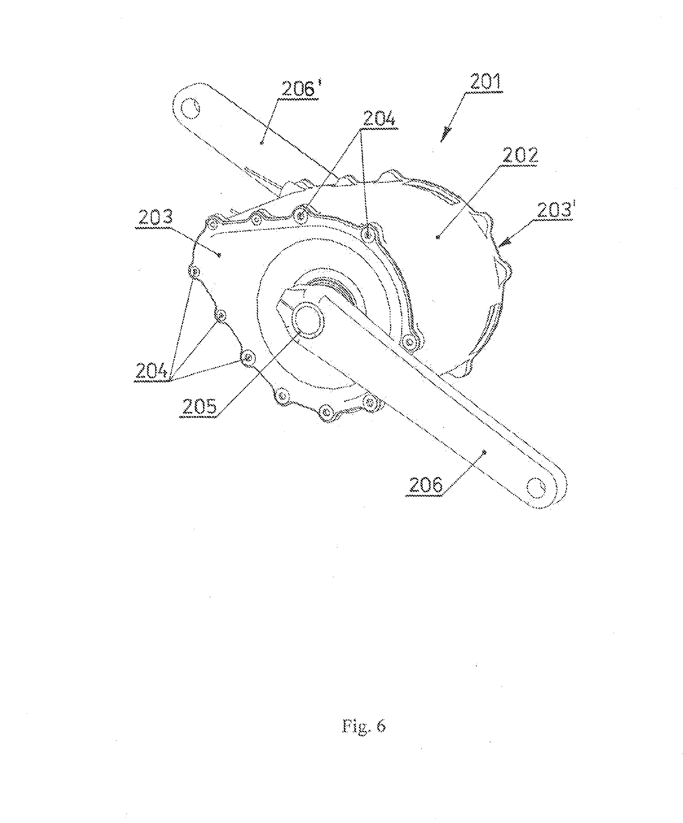

The invention is presented in greater detail in the following embodiments and in the attached drawing where fig. 1 is a perspective view of the multi-speed bicycle transmission in partial section in the most basic embodiment, fig. 2 is a longitudinal section of the multi-speed bicycle transmission in another embodiment, fig. 3, fig. 4 and fig. 5 are cross sections of the multi-speed bicycle transmission shown in fig.2, and fig.6 is a perspective view of the multi-speed bicycle transmission in another embodiment.

In the most basic embodiment ( fig.1 ) the transmission 1 has a housing 2 with integrated side covers 3, 3'.

Alternatively, the side covers may be fixed in the housing with fixing means, for example screws. The transmission comprises a bottom bracket axle 5 at the ends of which there are cranks 6, 6' . The transmission 1 comprises two planet carriers 7 and 8. The first planet carrier 7 is seated in the housing 2, in particular in the integrated side cover 3 by means of a bearing 10 and on an intermediate shaft 9 by two bearings 11. The second planet carrier 8 is fixed in the housing 2, in particular in the integrated side cover 3' by means of a bearing 12 and on the intermediate shaft 9 by means of two bearings 13. The first planet carrier 7 comprises two planetary sets 16, 16', whereas the second planet carrier 8 also comprises two planetary sets 17, 17'. The first planetary set 16 of the first planet carrier 7 comprises a sun wheel 25, planet wheels 21 and an outer rim 18. The second planetary set 16' of the first planet carrier 7 comprises a sun wheel 25', planet wheels 21' and an outer rim 18'. The first planetary set 17 of the second planet carrier 8 comprises a sun wheel 26, planet wheels 22 and an outer rim 19. The second planetary set 17' of the second planet carrier 8 comprises a sun wheel 26', planet wheels 22' and an outer rim 19', where the sun wheel 26' has the form of a toothing made on the outer surface of the intermediate shaft 9. The intermediate shaft 9 has a form of a hollow shaft which is located coaxially and rotationally around the bottom bracket axle 5. On the outer part of the intermediate shaft there are non-rotationally located sun wheels 25, 25', 26, 26' of the planetary sets 16, 16', 17, 17' of the first planet carrier 7 and of the second planet carrier 8. The sun wheels may be non-rotationally mounted on the intermediate shaft 9 or a toothing of the sun wheel may be made directly on the outer surface of the intermediate shaft 9, as, for example, in the case of the sun wheel 26' of the second planetary set 17' of the second planet carrier 8. The bottom bracket axle 5 is fixed in the first planet carrier 7 by means of a spline coupling 14, on the other side it is fixed by means of a bearing 15 in the second planet carrier 8. The outer rims 18, 18' are mounted on the first planet carrier 7, whereas the outer rims 19, 19' are mounted on the second planet carrier 8, and the position thereof may be stabilised by fixing means, for example bearings. Alternatively, the outer rims may be mounted in the housing of the transmission. The planet wheels 21, 21' are mounted by means of bearings on shafts mounted in the first planet carrier 7, whereas the planet wheels 22, 22' are mounted by means of bearings on shafts fixed in the second planet carrier 8. An output wheel 27 is a chain wheel and is fixed to the second planet carrier 8 with the use of fixing means, for example screws. The output wheel may alternatively be a sheave wheel, including a toothed wheel or a toothed wheel of a gear transmission. From the output wheel 27 the power is transmitted onto a wheel of the bicycle, for example by means of an endless chain, not shown in the drawing, which goes through holes made in the housing of the transmission.

In the housing 2 and/or in the side covers 3, 3' thereof there is a shaft 28 with rotationally mounted pawls thereon, used for blocking the outer rims of the planetary sets. In the embodiment shown in the drawing on the shaft 28 there are four pawls 29, 29', 30, 30', where the pawl 29 is used for blocking the outer rim 18 of the first planetary set 16 of the first planet carrier 7, whereas the pawl 29' is used for blocking the outer rim 18' of the second planetary set 16' of the first planet carrier 7, the pawl 30 is used for blocking the outer rim 19 of the first planetary set 17 of the second planet carrier 8 and the pawl 30' is used for blocking the outer rim 19' of the second planetary set 17' of the second planet carrier 8. Between the pawls 29, 29', 30, 30' there may be spacer sleeves used to stabilise their position. Moreover, the pawls are equipped with spring elements holding them down to the outer rims in a blocking position. The work of the pawls 29, 29', 30, 30' is controlled by a control shaft 32 fixed to the housing 2 and/or to the side covers thereof 3, 3' by means of bearings. The control shaft 32 has on its outer surface cams 33 assigned to the pawls 29, 29', 30, 30' and adjusting the location thereof. The rotation of the shaft 32 caused by a cord or cords 34 results in the influence of the cams 33 on a selected pawl and subsequent blocking of the outer rims of the planetary sets of the first and second planet carrier in a predefined order, and the cams are located in such a way that when the outer rim of the planetary set of one planet carrier is being blocked at the same time the so far blocked outer rim of another planetary set of the same planet carrier is released. During work of the transmission one outer rim is blocked in every planet carrier. The position of the control shaft 32 is stabilised by a blocking element, fixed to a spring element, which shall be presented in greater detail in another embodiment.

In the presented embodiment each outer rim has an assigned pawl, nevertheless there are possible embodiments where one pawl shall be assigned to all planetary sets of a given planet carrier as in one gear position only one outer rim in each planet carrier is blocked.

The operation of the multi-speed bicycle transmission presented above is consistent with the part concerning the description of the essence of the invention presented hereby. The power is transmitted first from the cranks onto the bottom bracket axle and the first planet carrier and then by the planetary set of the first planet carrier blocked by means of a pawl to the intermediate shaft with integrated sun wheels of all planetary sets and then through the planetary set of the second planet carrier blocked by means of a pawl onto the second planet carrier and the integrated output wheel, from where the power is transmitted onto a bicycle wheel.

In another embodiment ( fig. 2 - fig. 5 ) a multi-speed bicycle transmission 101 is presented which has a housing 102 with side covers 103, 103', fixed to the housing 102 by means of fixing elements, for example screws. Alternatively the side covers may be integrated with the housing and be a whole. The transmission comprises a bottom bracket axle 105 whose ends are used for fixing bicycle cranks 106, 106'. The transmission 101 comprises two planet carriers 107, 108. Said planet carriers 107 and 108 may be multielement carriers, which means they may be made up of many connected elements or they may be single-element carriers. The first planet carrier 107 is mounted in the housing 102, in particular in the side cover 103 thereof by means of a bearing 110 and on an intermediate shaft 109 by means of two bearings 111. The second planet carrier 108 is mounted in the housing 102, in particular in the side cover 103' thereof by means of a bearing 112 and on the intermediate shaft 109 by means of two bearings 113. The first planet carrier 107 comprises four planetary sets 116, 116', 116" and 116"'. The second planet carrier 108 also comprises four planetary sets 117, 117', 117", 117"'. The number of planetary sets in each carrier is at least two and may vary, for example two, three, four or five. The first planetary set 116 of the first planet carrier 107 comprises a sun wheel 125, planet wheels 121 and an outer rim 118.

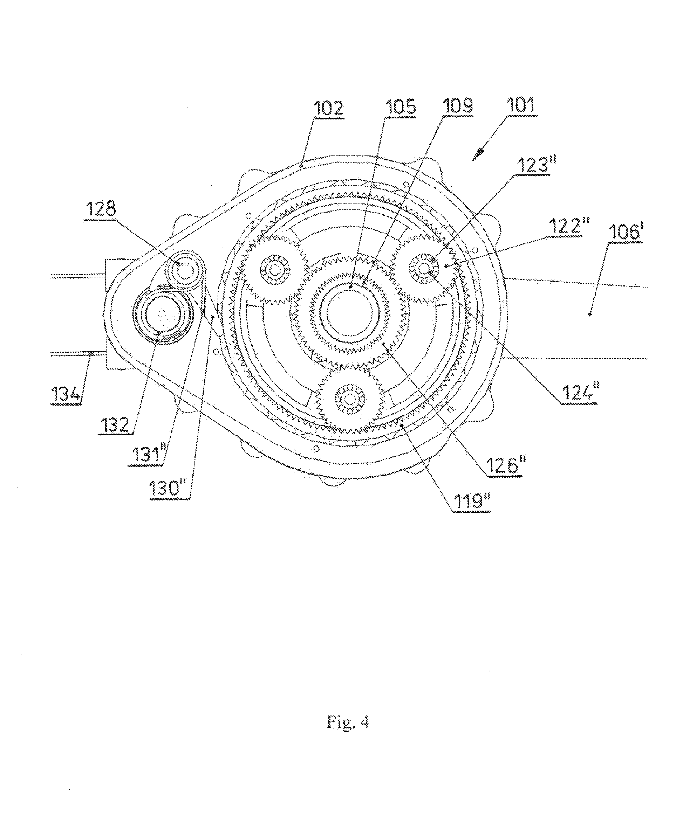

The second planetary set 116' of the first planet carrier 107 comprises a sun wheel 125', planet wheels 121' and an outer rim 118'. The third planetary set 116" of the first planet carrier 107 comprises a sun wheel 125", planet wheels 121" and an outer rim 118". The fourth planetary set 116"' of the first planet carrier 107 comprises a sun wheel 125"', planet wheels 121"' and an outer rim 118"'. The first planetary set 117 of the second planet carrier 108 comprises a sun wheel 126, planet wheels 122 and an outer rim 119. The second planetary set 117' of the second planet carrier 108 comprises a sun wheel 126', planet wheels 122' and an outer rim 119'. The third planetary set 117" of the second planet carrier 108 comprises a sun wheel 126", planet wheels 122" and an outer rim 119". The fourth planetary set 117"' of the second planet carrier 108 comprises a sun wheel 126"', planet wheels 122''' and an outer rim 119'''. The intermediate shaft 109 is a hollow shaft which is coaxially and rotationally located around the bottom bracket axle 105. On the outer part of the intermediate shaft there are non-rotationally located sun wheels 125, 125', 125'' and 125''' of the planetary sets 116, 116', 116'', 116''' of the first planet carrier 107 and sun wheels 126, 126', 126" and 126''' of the planetary sets 117, 117', 117'' and 117'''of the second planet carrier 108. The sun wheels may be non-rotationally mounted on the intermediate shaft 109 or a toothing of the sun wheel may be made directly on the outer surface of the intermediate shaft 109. The bottom bracket axle 105 is fixed in the first planet carrier 107 by means of a spline coupling 114, on the other side it is fixed by means of a bearing 115 in the second planet carrier 108. The outer rims 118, 118', 118", 118''' are mounted in the first planet carrier 107, whereas the outer rims 119, 119', 119'' and 119''' are mounted on the second planet carrier 108 and the position thereof is stabilised by fixing means, for example bearings 120. The outer rims may be alternatively mounted in the housing of the transmission. The planet wheels 121, 121', 121'' and 121''' are fixed by means of bearings 123 on shafts 124 ( fig.3 ) mounted on the first carrier 107, whereas the planet wheels 122, 122', 122" and 122''' are fixed by means of bearings 123" on shafts 124" ( fig. 4 ) mounted on the second planet carrier 108. The output wheel 127 is a chain wheel and is fixed to the second planet carrier 108 by means of fixing means, for example screws. The output wheel may alternatively be a sheave wheel, including a toothed wheel or a toothed wheel of a gear transmission. From the output wheel the power is transmitted onto a bicycle wheel, for example by means of an endless chain, not shown in the drawing, which goes through holes in the housing of the transmission.

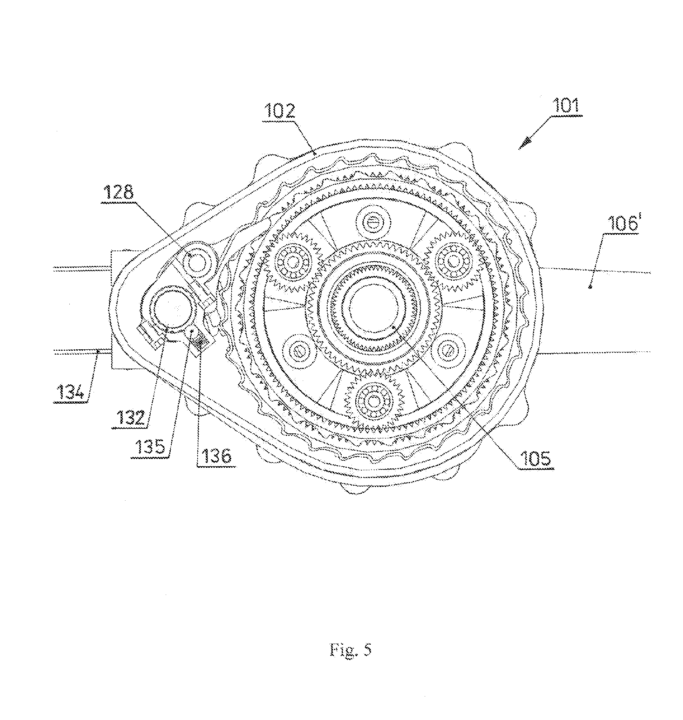

In the housing 102 and/or the side covers 103, 103' thereof there is a shaft 128 with rotationally mounted pawls used for blocking the outer rims of the planetary sets ( fig. 3 - fig. 5 ). In fig. 3, which shows the cross section of the first planetary set 116 of the first planet carrier 107, there is a pawl 129 cooperating with the outer rim 118 of this planetary set 116, where said pawl 129 is in a position in which it does not block the outer rim. In fig. 4, which is a cross section of the third planetary set 117'' of the second planet carrier 108, there is a pawl 130'' cooperating with the outer rim 119'' of the planetary set 117'', where said pawl 130'' is in a position in which it blocks the outer rim 119". The pawl 130" is held down to the outer rim by means of a spring 131''. The sections in fig. 3 and fig. 4 also show the control shaft 132 for controlling the work of the pawls, which control shaft 132 on its outer surface has cams 133 assigned to the pawls. The rotation of the shaft 132 caused by a cord or cords 134 results in the influence of the cams 133 on a selected pawl and subsequent blocking of the outer rims of the planetary sets of the first and second planet carrier in a predefined order, and the cams are in such a position that when the outer rim of a planetary set in one planet carrier is being blocked, the other so far blocked outer rim of another planetary set of the same planet carrier is being released. During the work of the transmission there is one blocked outer rim in each planet carrier. The position of the control shaft 132 is stabilised by means of a blocking element 135, supported by a spring element 136 ( fig. 5 ), where said blocking element 135, for example in the form of a ball goes into recesses made on the surface of the control shaft 132. Between the pawls there may be spacer sleeves to stabilise the position thereof. Preferably each outer rim has an assigned pawl, nevertheless there are possible embodiments where one pawl shall be assigned to all planetary sets of a given planet carrier as in one gear shifting position only one outer rim in one planet carrier is blocked.

In another embodiment external view ( fig. 6 ) of a multi-speed bicycle transmission 201 comprises a housing 202, which may be fixed to the bicycle frame or alternatively may be a part of the bicycle frame. The housing 202 has two side covers 203, 203' which are fixed to the housing 202 by means of fixing means 204, for example screws. Alternatively, the side covers may be a part of the housing 202 as was presented in the embodiments described above . The transmission 201 also comprises a bottom bracket axle 205 on the ends of which there are cranks 206, 206'. Inside the transmission 201, which is not shown in the drawing, there are two planet carriers integrated with an intermediate shaft according with the embodiments described above. Each planet carrier has at least two planetary sets, however there are various possibilities of configurations of the planetary sets of the first and second planet carrier, for example 2 +2, 2 + 3, 2 + 4, 3 + 4, 3 + 2, 3 + 3, 2 + 5, depending on the function of the bicycle.

## Claims

1. A multi-speed bicycle transmission comprising a bottom bracket axle, whose ends are provided for attaching cranks, a planet carrier non-rotationally attached to said bottom bracket axle, said planet carrier comprising a planetary set which comprises a sun wheel, a planet wheel or wheels and an outer rim, and also comprising an output wheel capable of rotating at a speed different from the rotational speed of the bottom bracket axle, and also equipped with a pawl mechanism of the planetary set **characterised in that** said planet carrier (7, 107) comprises at least two planetary sets (16, 16', 116, 116', 116", 116"'), each comprising a sun wheel (25, 25', 125, 125', 125", 125"'), a planet wheel or wheels (21, 21', 121, 121', 121", 121"') and an outer rim (18, 18', 118, 118', 118", 118"'), and around the bottom bracket axle (5, 105, 205) there is a coaxial, rotational second planet carrier (8, 108) also comprising at least two planetary sets (17, 17', 117, 117', 117", 117"') each of them comprising a sun wheel (26, 26', 126, 126', 126", 126"'), a planet wheel or wheels (22, 22', 122, 122', 122", 122"') and an outer rim (19, 19', 119, 119', 119", 119"') where around the bottom bracket axle ( 5, 105, 205 ) there is a coaxial intermediate shaft (9, 109) which is a hollow shaft on the outer part of which there are non-rotationally located sun wheels (25, 25', 125, 125', 125", 125"', 26, 26', 126, 126', 126", 126"') of the planetary sets of the first and second planet carrier and the pawl mechanism comprises at least two separate pawls (29, 29', 30, 30', 129, 130") each of them cooperating with respective outer rims (18, 18', 118, 118', 118", 118"') of the planetary sets of the first planet carrier and the outer rims (19, 19', 119, 119', 119", 119"') of the planetary sets of the second planet carrier.

2. The multi-speed bicycle transmission according to claim 1 **characterised in that** each planet carrier (7, 107, 8, 108) comprises more than two planetary sets (16, 16', 116, 116', 116", 116"', 17, 17', 117, 117', 117", 117"') and preferably each planet carrier comprises four planetary sets.

3. The multi-speed bicycle transmission according to claim lor 2 **characterised in that** both of the planet carriers (7, 107, 8, 108) and the output wheel (27, 127) are located inside a housing (2, 102, 202) of the transmission (1, 101, 201).

4. The multi-speed bicycle transmission according to claim 3 **characterised in that** the output wheel (27, 127) is a chain wheel or a sheave wheel including a toothed wheel or a toothed wheel of a gear transmission.

5. The multi-speed bicycle transmission according to one of claims 1 - 4 **characterised in that** each of the outer rims (18, 18', 118, 118', 118", 118"', 19, 19', 119, 119', 119", 119"') has an assigned separate pawl (29, 29', 30, 30', 129, 130").

6. The multi-speed bicycle transmission according to claim 5 **characterised in that** the pawls (29, 29', 30, 30', 129, 130") are rotationally mounted on an elongated shaft (28, 128) and are equipped with cooperating spring elements (131").

7. The multi-speed bicycle transmission according to claim 6 **characterised in that** the pawls (29, 29', 30, 30', 129, 130") cooperate with a control shaft (32, 132) having on its outer surface cams (33, 133) cooperating with assigned pawls (29, 29', 30, 30', 129, 130").

8. The multi-speed bicycle transmission according to claim 7 **characterised in that** the position of the control shaft (32, 132) is stabilised by means of a stabilising element (135) supported by a spring element (136).

9. The multi-speed bicycle transmission according to claims 7 or 8 **characterised in that** the position of the control shaft (32, 132) is adjusted by means of at least one cord (34, 134) wrapped around the control shaft (32, 132).

10. The multi-speed bicycle transmission according to one of the claims 1 - 9 **characterised in that** the first planet carrier (7, 107) is fastened by means of bearings (10, 11, 110, 111) on an intermediate shaft (9, 109) and in the housing (2, 102, 202) and/or the side cover thereof (3, 103, 203).

11. The multi-speed bicycle transmission according to one of the claims 1 - 10 **characterised in that** the second planet carrier (8, 108) is fastened by means of bearings (12, 13, 112, 113) on the intermediate shaft (9, 109) and in the housing (2, 102, 202) and/or the side cover thereof (3', 103', 203').
